Europäisches Patentamt

European Patent Office

Office européen des brevets

(19)

(11) Numéro de publication: **0 297 949**
**B1**

(12) # FASCICULE DE BREVET EUROPEEN

(45) Date de publication du fascicule du brevet:
**03.10.90**

(51) Int. Cl.⁵: **B01J 27/188,** B01J 27/19, B01J 23/85, C10G 45/04

(21) Numéro de dépôt: **88401551.2**

(22) Date de dépôt: **21.06.88**

(54) Catalyseur comprenant un support minéral, du phosphore et du bore, méthodes de préparation et utilisation en hydroraffinage de coupes pétrolières.

(30) Priorité: **01.07.87 FR 8709359**

(43) Date de publication de la demande:
**04.01.89 Bulletin 89/1**

(45) Mention de la délivrance du brevet:
**03.10.90 Bulletin 90/40**

(84) Etats contractants désignés:
**BE DE ES GB IT NL**

(56) Documents cités:
**FR-A- 2 140 166**
**GB-A- 1 016 101**
**US-A- 3 666 685**

(73) Titulaire: **INSTITUT FRANCAIS DU PETROLE, 4, Avenue de Bois-Préau, F-92502 Rueil-Malmaison(FR)**

(72) Inventeur: **Toulhoat Hervé, 51, avenue Charles Tellier, F-78800 Houilles(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un catalyseur, d'hydroraffinage de charges hydrocarbonées, comprenant un support minéral, du phosphore, du bore, au moins un métal du groupe VIB de la classification périodique des éléments et au moins un métal du groupe VIII de ladite classification (Handbook of Chemistry and Physics 64ème édition, 1983-1984, intérieur 1ère page couverture).

La présente invention concerne également les procédés de préparation dudit catalyseur, ainsi que son utilisation pour l'hydroraffinage de coupes pétrolières, et plus particulièrement pour l'hydrogénation, l'hydrodésazotation et l'hydrodésulfuration de coupes pétrolières contenant des composés aromatiques, de l'azote et du soufre.

L'hydrotraitement des coupes pétrolières soufrées prend une importance de plus en plus grande dans la pratique de raffinage avec la nécessité croissante de conversion des fractions lourdes en fraction plus légères valorisables en tant que carburants.

Cet état de fait tient d'une part à l'intérêt économique de valoriser au mieux des bruts importés de plus en plus riches en fractions lourdes et d'autre part au déficit relatif en hydrogène de ces fractions lourdes et à leur richesse en hétéro-atomes, dont l'azote et le soufre, par rapport aux spécifications imposées dans les divers pays pour les carburants commerciaux.

Cette valorisation implique une réduction relativement importante du poids moléculaire des constituants lourds, qui peut être obtenue par exemple au moyen de réactions de craquage.

Les procédés de craquage les plus performants mis en oeuvre actuellement, sont des procédés catalytiques, tel que par exemple le craquage catalytique en lit fluide (F.C.C.) et l'hydrocraquage catalytique.

Ces deux procédés mettent en oeuvre des catalyseurs de nature essentiellement acide, vis-à-vis desquels les composés hétérocycliques azotés, très basiques, rencontrés dans les fractions lourdes se comportent comme des poisons à la toxicité très marquée.

En conséquence la désazotation des charges de craquage et d'hydrocraquage catalytiques, constitue un des moyens possibles pour améliorer le rendement global de ces procédés , et il est alors souhaitable de diminuer au maximum la teneur en azote des charges avant de les craquer.

Les procédés actuels d'hydroraffinage catalytique utilisent des catalyseurs capables de promouvoir les principales réactions utiles à la mise en valeur des coupes lourdes, en particulier l'hydrogénation des noyaux aromatique(HDA), l'hydrodésulfuration (HDS), l'hydrodésazotation (HDN) et autres hydroéliminations d'hétéro-atomes; à ce titre, au moins une étape d'hydroraffinage est habituellement intégrée dans chacun des schémas connus des valorisations des coupes pétrolières lourdes.

Plus particulièrement, l'hydroraffinage est tout indiqué pour le prétraitement des charges des procédés de craquage et d'hydrocraquage catalytiques.

L'influence de cet hydrotraitement préalable sur le rendement global et la durée de vie du catalyseur de craquage et/ou d'hydrocraquage sera d'autant plus importante que l'on disposera de catalyseurs d'hydrotraitements plus sélectifs en hydrodésazotation et en hydrogénation.

Le contexte de la présente invention, résumé ci-avant, est bien connu de l'homme du métier. On trouvera par exemple une analyse détaillée de ce contexte dans Oil & Gas Journal, 16 février 1987, pages 55 à 66, Van Kessel et al.

De nombreux catalyseurs d'hydrotraitement ont été décrits dans la littérature et en particulier dans la littérature brevets.

Le document US-A-2938001 décrit un catalyseur comprenant un support formé d'un oxyde inorganique réfractaire et d'environ 5 à 80% en poids de phosphate de bore (PBO$_4$) et une quantité catalytique d'au moins un métal hydrogénant choisi dans les groupes V à VIII de la classification périodique des éléments. L'oxyde inorganique est de préférence de l'alumine et/ou de la silice et les métaux utilisés dans les exemples sont le cobalt et le molybdène en association. Ce document ne mentionne pas de gamme de rapport de la quantité de phosphore par rapport à celle du métal du groupe VIB, ni de gamme de rapport entre le ou les métaux du groupe VIII et le ou les métaux du groupe VIB; la porosité du support n'est pas mentionnée. Les catalyseurs selon ce brevet sont décrits comme permettant une diminution sensible des dépôts de coke. Le mode de préparation consiste à incorporer à l'oxyde inorganique, du phosphate de bore finement divisé ou à former une suspension d'un gel d'oxyde inorganique à laquelle on ajoute de l'acide borique et de l'acide phosphorique ce qui après séchage et calcination permet d'obtenir un mélange d'oxyde inorganique et de phosphate de bore. Les métaux sont introduits par imprégnation sur le support préalablement calciné contenant du phosphore et du bore.

Le document US-A-3453219 décrit un catalyseur d'hydroraffinage du pétrole brut comprenant, un support contenant de la silice, de l'alumine et de 13 à 35% en poids de phosphate de bore, et au moins un métal hydrogénant choisi dans le groupe formé par les métaux du groupe VIB et les métaux du groupe VIII. Le support de ce catalyseur est préparé par coprécipitation de silice et d'alumine à un pH supérieur à environ 8 puis incorporation au gel de silice-alumine, encore humide, du phosphate de bore ou du mélange équimolaire d'acide borique et d'acide phosphorique.

Le catalyseur est obtenu par imprégnation du support, préalablement séché, par une solution aqueuse de composés des métaux choisis, par exemple d'oxyde de molybdène et de nitrate de nickel. Le catalyseur final a une densité apparente inférieure à 0,35 g x cm$^{-3}$.

Le document US-A-3525684 décrit des compositions catalytiques comprenant un oxyde minéral réfractaire, de 1 à 5% en poids de phosphate de bore, au moins un métal du groupe VIB et au moins un métal du groupe VIII. Ces compositions sont caractérisées par un volume poreux d'au moins 0,5 cm$^3$ x g$^{-1}$ fourni par des pores de diamètre compris entre 11,7 et 50 nanomètres. Ces compositions catalytiques sont utilisables pour l'hydroraffinage des pétroles bruts et des résidus pétroliers.

Le document US-A-3666685 décrit les mêmes compositions catalytiques que celles du document US-A-3525684 à l'exception du fait qu'elles possèdent au moins 0,4 cm$^3$ x g$^{-1}$ de volume poreux fourni par des pores de diamètre compris entre 10 et 50 nanomètres.

De façon surprenante on a découvert des catalyseurs de composition spécifique associant un couple de métaux actifs à un support comprenant une matrice minérale du bore et du phosphore, ayant une activité en hydrogénation des hydrocarbures aromatiques et en hydrodésazotation plus importante que les formules catalytiques décrites dans les documents ci-dessus et présentant également une activité importante en hydrodésulfuration et en craquage. Sans vouloir être lié par une quelconque théorie, il semble que cette activité particulièrement élevée des catalyseurs de la présente invention est due à une synergie particulière de l'association, dans des proportions particulières, du bore et du phosphore, permettant une amélioration des propriétés hydrogénantes et d'hydrodésazotation des couples de métaux utilisés habituellement sous leurs formes sulfurées dans les réactions d'hydroraffinages.

Le catalyseur de la présente invention comprend : a/ un support comprenant une matrice minérale poreuse, du bore ou un composé de bore et du phosphore ou un composé de phosphore, et b/ au moins un métal ou composé de métal du groupe VIB de la classification périodique des éléments (Handbbok of Chemistry and Physics cité supra) et au moins un métal ou composé de métal du groupe VIII de ladite classification, dans lequel la somme des quantités de bore et de phosphore, exprimées respectivement en poids de trioxyde de bore (B$_2$O$_3$) et de pentoxyde de phosphore (P$_2$O$_5$) par rapport au poids du support est d'environ 5 à 15%, de préférence environ 6 à 12% et avantageusement d'environ 8 à 11,5%, le rapport atomique bore sur phosphore (B/P) est d'environ 1,05:1 à 2:1 et de préférence d'environ 1,1:1 à 1,8:1 et au moins 40% et de préférence au moins 50% du volume poreux total du catalyseur fini est contenu dans des pores de diamètre moyen supérieur à 13 nanomètres.

Le catalyseur de la présente invention a préférentiellement un volume poreux total compris entre 0,38 et 0,51 cm$^3$xg$^{-1}$.

La quantité de métal ou métaux du groupe VIB contenue dans le catalyseur est habituellement telle que le rapport atomique phosphore sur métal ou métaux du groupe VIB (P/VIB) soit d'environ 0,5:1 à 1,5:1 et de préférence environ 0,7:1 à 0,9:1.

Les quantités respectives de métal ou métaux du groupe VIB et de métal ou métaux du groupe VIII contenues dans le catalyseur sont habituellement telles que le rapport atomique métal ou métaux du groupe VIII sur métal ou métaux du groupe VIB (VIII/VIB) soit d'environ 0,3:1 à 0,7:1 et de préférence d'environ 0,3:1 à environ 0,45:1.

La quantité pondérale des métaux contenus dans le catalyseur fini exprimée en poids de métal par rapport au poids du catalyseur fini est habituellement, pour le métal ou les métaux du groupe VIB d'environ 2 à 30% et de préférence d'environ 5 à 25%, et pour le métal ou les métaux du groupe VIII d'environ 0,1 à 15% et plus particulièrement d'environ 0,1 à 5% et de préférence d'environ 0,15 à 3% dans le cas des métaux noble du groupe VIII (Pt, Pd, Ru, Rh, Os, Ir) et d'environ 0,5 à 15% et de préférence d'environ 1 à 10% dans le cas des métaux non-nobles du groupe VIII (Fe, Co, Ni).

Parmi les métaux du groupe VIB on utilise de préférence le molybdène et/ou le tungstène et parmi les métaux du groupe VIII on préfère employer les métaux non nobles fer, cobalt et/ou nickel. D'une manière avantageuse on utilise les associations de métaux suivantes: nickel-molybdène, nickel-tungstène, cobalt-molybdène, cobalt-tungstène fer-molybdène et fer-tungstène. Les associations les plus préférées sont nickel-molybdène et cobalt-molybdène. Il est également possible d'utiliser des associations de trois métaux par exemple nickel-cobalt-molybdène.

La matrice minérale poreuse est choisie de manière à ce que le catalyseur final ait les caractéristiques de volume poreux précisées ci-avant. Cette matrice est habituellement choisie dans le groupe formé par l'alumine, la silice-alumine, la magnésie, la zircone, l'oxyde de titane , les aluminates, par exemple les aluminates de magnésium, de calcium, de barium, de manganèse, de fer, de cobalt, de nickel, de cuivre et de zinc, les aluminates mixtes par exemple ceux comprenant au moins deux des métaux cités ci-avant.

On préfère utiliser des matrices contenant de l'alumine par exemple l'alumine et la silice-alumine. Lorsque la matrice contient de la silice il est préférable que la quantité de silice soit au plus égale à 25% en poids par rapport au poids total de la matrice.

La matrice peut également renfermer outre au moins l'un des composés cités ci-avant, au moins un alumino-silicate zéolithique cristallin, (zéolithe) synthétique ou naturel. La quantité de zéolithe représentant habituellement de 0 à 95% en poids et de préférence de 1 à 80% en poids par rapport au poids de la matrice.

On peut ainsi utiliser avantageusement des mélanges d'alumine et de zéolithe et des mélanges de silice-alumine et de zéolithe.

Parmi les zéolithes on préfère habituellement employer des zéolithes dont le rapport atomique de charpente, silicium sur aluminium (Si/Al) est supérieur à environ 5:1. On emploie avantageusement des zéolithes de structures faujasite et en particulier les zéolithes Y stabilisées ou ultrastabilisées.

La matrice la plus couramment employée est l'alumine et on préfère usuellement l'alumine de type gamma cubique.

Les catalyseurs de la présente invention peuvent être préparés par toutes méthodes bien connues de l'homme du métier. Ils sont habituellement obtenus par imprégnation de la matrice à l'aide de solution des éléments constitutifs du catalyseur final.

La matrice est habituellement préalablement mise en forme et calcinée avant imprégnation. La mise en forme peut être réalisée par exemple par extrusion, par pastillage, par la méthode de la goutte d'huile (oil-drop), par granulation au plateau tournant ou par toute autre méthode bien connue de l'Homme du métier.

La matrice préformée est alors habituellement calcinée sous air, usuellement à une température d'au moins environ 600°C, couramment d'environ 600 à 1000°C.

L'imprégnation de la matrice est de préférence effectuée par la méthode d'imprégnation dite "à sec" bien connue de l'Homme du métier.

L'imprégnation peut être effectuée en une seule étape par une solution contenant l'ensemble des éléments constitutifs du catalyseur final c'est-à-dire une solution contenant au moins un composé de phosphore, au moins un composé de bore, au moins un composé d'au moins un métal du groupe VIB et au moins un composé d'au moins un métal du groupe VIII. Le produit résultant de l'imprégnation est ensuite mûri, séché, puis calciné sous atmosphère oxydante, par exemple sous air, habituellement à une température d'environ 300 à 600°C et de préférence d'environ 350 à 550°C. L'imprégnation est de préférence effectuée en au moins deux étapes, le composé de phosphore étant introduit dans une étape distincte de celle dans laquelle on introduit le composé de bore. L'introduction du bore est de préférence effectuée après l'introduction du phosphore et avantageusement après l'introduction de tous les autres éléments constitutifs du catalyseur final.

L'imprégnation de la matrice par le composé de bore peut être effectuée à l'aide d'une solution aqueuse, d'une solution dans un mélange eau-solvant organique ou d'une solution dans un solvant organique d'au moins un composé de bore. A titre d'exemples non limitatifs on peut citer comme solvants organiques les alcools et les hydrocarbures et comme mélanges eau-solvants organiques les mélanges eau-alcools.

Comme exemples d'alcools on peut citer le méthanol, l'éthanol, les propanols et les butanols. Comme exemples d'hydrocarbures on peut citer les hydrocarbures liquides à la température ambiante tels que les hydrocarbures paraffiniques saturés dont la chaîne hydrocarbonée contient de 5 à 12 atomes de carbone (pentane, hexane, heptane etc...), les hydrocarbures naphténiques contenant de 6 à 12 atomes de carbone, les hydrocarbures aromatiques contenant de 6 à 11 atomes de carbone (benzène, toluène etc...) et les mélanges d'hydrocarbures tels que les coupes essences, kérosène, "white spirit" etc...

La solution d'imprégnation du composé de bore est de préférence une solution dans un solvant organique ou dans un mélange eau-solvant organique. On emploie avantageusement une solution dans un alcool et par exemple dans le méthanol.

Dans une forme avantageuse de réalisation le procédé de préparation des catalyseurs de l'invention comprend les étapes suivantes:

a/ on imprègne la matrice minérale poreuse à l'aide d'une solution aqueuse contenant au moins un composé soluble du phosphore, au moins un composé soluble d'au moins un métal du groupe VIB et au moins un composé soluble d'au moins un métal du groupe VIII;

b/ on mûrit, en atmosphère saturée de vapeur d'eau, le produit résultant de l'étape (a); ce mûrissement est habituellement effectué à une température d'environ 15 à 50°C et de préférence environ 15 à 35°C, pendant une durée usuellement d'au moins 6 heures et couramment d'environ 6 heures à environ 24 heures et de préférence environ 8 à 15 heures;

c/ on sèche et on calcine sous air le produit résultant de l'étape (b); cette calcination est habituellement effectuée à une température d'au moins 300°C et couramment d'environ 300 à 600°C et de préférence d'environ 350 à 550°C;

d/ on imprègne le produit résultant de l'étape (c) à l'aide d'une solution d'au moins un composé de bore;

e/ on mûrit en atmosphère saturée de solvant (eau, solvant organique ou mélange eau-solvant organique ayant été utilisé pour former la solution d'imprégnation de l'étape (d)) le produit résultant de l'étape (d); ce mûrissement est habituellement effectué à une température d'environ 15 à 50°C et de préférence d'environ 15 à 35°C, pendant une durée usuellement d'au moins 6 heures et couramment d'environ 6 heures à environ 24 heures et de préférence d'environ 8 heures à 15 heures;

f/ on élimine le solvant, par exemple par distillation sous vide ou par chauffage, puis on calcine sous air le produit débarrassé de solvant et de préférence sec; cette calcination est habituellement effectuée à une température d'au moins 300°C et couramment d'environ 300 à 600°C et de préférence d'environ 350 à 550°C, et de façon souvent avantageuse d'environ 420 à 520°C.

Au cours des étapes d'imprégnation les composés utilisés sont habituellement choisis parmi les composés suivants :

- pour le phosphore:les acides et les sels acides tels que les acides phosphoriques de préférence l'acide orthophosphorique ($H_3PO_4$), les acides phosphoreux par exemple l'acide hypophosphoreux, l'acide phosphomolybdique et ses sels, et l'acide phosphotungstique et ses sels,
- pour les métaux du groupe VIB et en particulier pour le molybdène et le tungstène : l'acide molybdique, les bleus de molybdène, les molybdates et paramolybdates d'ammonium, l'acide tungstique, les tungstates d'ammonium, l'acide phosphomolybdique et ses sels par exemple le sel d'ammonium, l'acide phosphotungstique et ses sels par exemple le sel d'ammonium; pour le chrome on peut citer l'acide chromique et le chromate d'ammonium,

- pour les métaux du groupe VIII : les nitrates, sulfates, phosphates, halogénures par exemple chlorures, bromures et fluorures, carboxylates par exemple acétate, et carbonates pour les métaux non nobles; pour les métaux nobles, les halogénures, par exemple le chlorure de palladium et le tétrachlorure de ruthénium, les nitrates tels que le nitrate de rhodium et le nitrate de palladium, les acides tel que l'acide chloroplatinique, et l'oxychlorure ammoniacal de ruthénium,

- pour le bore:les acides ou les sels acides tels que les acides boriques de préférence l'acide orthoborique ($H_3BO_3$), l'acide fluoroborique, le borate d'ammonium, l'oxyde de bore, les esters boriques de formules $B(OR)_3$ et $HB(OR)_2$ dans lesquelles R est un reste hydrocarboné ayant habituellement de 1 à 50 atomes de carbone et pouvant comporter des hétéroatomes dans la chaîne ou comme substituant sur la chaîne; à titre d'exemple de restes hydrocarbonés on peut citer les radicaux méthyle, éthyle, propyles, butyles, pentyles, heptyles et octyles. Les groupes R dans les formules ci-avant peuvent être identiques ou différents les uns des autres.

Les composés préférés sont l'acide orthophosphorique, le molybdate d'ammonium, le tungstate d'ammonium, le nitrate de nickel, le nitrate de cobalt, le nitrate de fer et l'acide orthoborique.

Au cours de la préparation, il est préférable d'employer des solutions homogènes de manière à obtenir une bonne dispersion des éléments dans la matrice.

Il est souhaitable d'avoir une dispersion homogène de l'ensemble des éléments de manière à favoriser leur interaction mutuelle et en particulier l'interaction entre les espèces boriques et phosphatées et les espèces métalliques.

Le catalyseur d'hydroraffinage selon la présente invention contient au moins 5% en poids et de préférence au moins 6% en poids d'oxydes de bore et de phosphore par rapport au support. On a en effet remarqué que les activités en hydrogénation et en hydrodésazotation diminuent fortement losque la quantité de bore et de phosphore devient inférieure à environ 5%. Sans vouloir être lié par une quelconque théorie, il est vraisemblable que ce seuil soit du à un phénomène de combinaison partielle des espèces phosphoriques et boriques avec la matrice, phénomène susceptible de soustraire ces espèces à la combinaison synergique avec les sites métalliques actifs. Au-delà de 15%, les activités diminuent également fortement . Ceci est probablement lié à la chute importante de surface spécifique qui se manifeste alors, vraisemblablement par suite d'un frittage des particules de support. Le développement des sites actifs est alors gêné par la présence des ions phosphates et borates interagissant en trop grande quantité avec le support.

Les catalyseurs de la présente invention sont utilisables en hydroraffinage de coupes d'hydrocarbures contenant du soufre et de l'azote, par exemple les résidus atmosphériques, les résidus sous vide, les bruts désasphatés, les fuels lourds, les distillats atmosphériques et les distillats sous vide.

Les catalyseurs de la présente invention peuvent être aussi avantageusement utilisés lors du prétraitement des charges de craquages catalytiques et en première étape d'un hydrocraquage ou d'hydroconversion douce; ils sont alors usuellement employés en association avec un catalyseur acide, zéolithique ou non zéolithique pour la deuxième étape du traitement.

Les conditions d'hydroraffinage des coupes d'hydrocarbures sont bien connues de l'homme du métier, habituellement on opère à une température d'environ 250 à 470°C, sous une pression partielle d'hydrogène d'environ 0,05 à 30 MPa, avec une vitesse spatiale d'environ 0,1 à 20 volumes par volume de catalyseur et par heure, le rapport hydrogène gazeux sur charge liquide d'hydrocarbures étant d'environ 50 à 5000 normaux mètres cubes par mètre cube; la pression totale est habituellement d'environ 0,1 à 35 MPa.

Les catalyseurs de l'invention sont de préférence soumis à un traitement de sulfuration, permettant de transformer, au moins en partie, les espèces métalliques en sulfure, avant leur mise en contact avec la charge à traiter. Ce traitement d'activation par sulfuration est bien connu de l'Homme du métier et peut être effectué par toute méthode déjà décrite dans la littérature.

La sulfuration est habituellement effectuée par passage d'hydrogène sulfuré ou d'une coupe d'hydrocarbure contenant du soufre sur le catalyseur dans des conditions permettant l'activation dudit catalyseur. Elle peut aussi être préparée hors site par imprégnation du catalyseur par une solution d'un composé soufré, séchage et traitement thermique, puis achevée in-situ par traitement thermique sous hydrogène.

Les exemples suivants illustrent l'invention sans en limiter la portée.

EXEMPLE 1 (comparatif)

On prépare environ 5 kg d'extrudés d'alumine gamma cubique dénommés par la suite, "matrice". A cet effet, environ 5,8 kg de boehmite tabulaire ultrafine ou "gel d'alumine" commercialisée sous le nom SB3 par la société CONDEA Chemie GMBH sont malaxés pendant 15 minutes dans une malaxeuse-extrudeuse O'TOOLE et compagnie après incorporation de 3,5 litres d'une solution aqueuse d'acide nitrique à 1,5% en poids, puis extrudés à travers une filière comportant des orifices cylindriques de diamètre 1,3 ·

mm. Les extrudés sont séchés pendant une nuit à 110°C en étuve ventilée, puis subissent une calcination sous air pendant 2 heures à 600°C en four statique. La matrice obtenue présente un volume poreux total de 0,65 cm³ x g⁻¹, une surface spécifique de 240 m² x g⁻¹ (méthode BET) et une fraction du volume poreux total en pores de diamètre supérieur à 13 nanomètres égale à 15%.

L'analyse de la "matrice" par diffraction des rayons X permet de déterminer qu'elle est constituée uniquement d'alumine gamma cubique de faible cristallinité.

On imprègne 1 kg de matrice par 680 cm3 d'une solution aqueuse fraîchement préparée contenant 228,2 g d'heptamolybdate d'ammonium tétrahydraté et 148 g de nitrate de nickel hexahydraté. La matrice imprégnée est mûrie dans un flacon étanche pendant une nuit à 20°C, puis séchée en étuve ventilée pendant deux heures à 110°C. Les extrudés secs sont ensuite calcinés pendant deux heures à 450°C.

On obtient ainsi le catalyseur A dont les caractéristiques sont résumées dans le tableau 1 ci-après.

### EXEMPLE 2 (comparatif)

On procède de la même façon que dans l'exemple 1 pour préparer le catalyseur A, mais on utilise une solution aqueuse d'imprégnation contenant 201 g d'acide orthophosphorique à 85% en poids, 256,5g d'heptamolybdate d'ammonium tétrahydraté et 166,3 g de nitrate de nickel hexahydraté. On obtient ainsi le catalyseur B dont les caractéristiques sont résumées dans le tableau 1 ci-après.

### EXEMPLE 3 (comparatif)

On procède de la même façon que dans l'exemple 2 mais on utilise une solution aqueuse d'imprégnation ne contenant pas d'acide orthophosphorique et contenant les mêmes quantités des mêmes composés de molybdène et de nickel que dans l'exemple 2. Après maturation, séchage et calcination dans les conditions décrites dans l'exemple 1 le produit obtenu est imprégné par 680 cm³ d'une solution à 165 g/l d'acide borique dans le méthanol. Le produit imprégné est soumis à une maturation en récipient fermé, en présence de méthanol liquide, pendant une nuit à 20°C, puis on élimine le méthanol par évaporation sous vide primaire à 130°C dans un évaporateur rotatif. Le produit sec est soumis à une calcination finale pendant 2 heures à 500°C sous balayage d'air à un débit de 100 litres par heure. On répète une nouvelle fois cette opération d'imprégnation par 680 cm³ de solution-méthanolique à 165 g/l d'acide borique, mûrissement, évaporation du méthanol à 130°C et calcination sous air à 500°C pendant 2 heures. On obtient le catalyseur C, dont les caractéristiques sont résumées dans le tableau 1 ci-après.

### EXEMPLE 4

On opère de la même façon que dans l'exemple 2 pour préparer le catalyseur B mais on utilise une solution aqueuse d'imprégnation contenant 122,9 g d'acide orthophosphorique à 85% en poids, 256,5 g d'heptamolybdate d'ammonium tétrahydraté et 166,3 g de nitrate de nickel hexahydraté. Le produit obtenu, après maturation, séchage et calcination dans les conditions décrites dans l'exemple 1, est alors imprégné par 620 cm³ d'une solution à 145 g/l d'acide borique dans le méthanol. Le produit imprégné est mûri, séché et calciné comme décrit ci-avant dans l'exemple 3.

On obtient ainsi le catalyseur D dont les caractéristiques sont résumées dans le tableau 1 ci-après. Le pourcentage en poids de la somme du poids de trioxyde de bore et de pentoxyde de phosphore par rapport au support est de 11,02%.

### EXEMPLE 5 (comparatif)

On opère de la même manière que dans l'exemple 4 mais on utilise une solution aqueuse contenant la même quantité des mêmes composés de molybdène et de nickel et 135,2 g d'acide orthophosphorique à 85% en poids, puis 620 cm³ d'une solution à 122 g/l d'acide borique dans le méthanol.

On obtient ainsi le catalyseur E dont les caractéristiques sont résumées dans le tableau 1 ci-après. Le pourcentage en poids de la somme du poids de trioxyde de bore et de pentoxyde de phosphore par rapport au support est de 11,02%.

### EXEMPLE 6 (comparatif)

On opère de la même manière que dans l'exemple 4, mais on utilise une solution aqueuse contenant 271,8 g d'heptamolybdate d'ammonium tétrahydraté, 176,2 g de nitrate de nickel hexahydraté et 189,4 g d'acide orthophosphorique à 85% en poids, puis 620 cm³ d'une solution à 119 g/l d'acide borique dans le méthanol. L'imprégnation par la solution méthanolique d'acide borique est réalisée deux fois de la même manière qu'à l'exemple 3. On obtient ainsi le catalyseur F dont les caractéristiques sont résumées dans la tableau 1 ci-après. Le pourcentage en poids de la somme du poids de trioxyde de bore et de pentoxyde de phosphore par rapport au support est de 16,03%.

EXEMPLE 7 (comparatif)

On opère de la même manière que dans l'exemple 4, mais on utilise une solution aqueuse contenant 237,8 g d'heptamolybdate d'ammonium tétrahydraté, 154,2 g de nitrate de nickel hexahydraté et 41,4 g d'acide phosphorique à 85% en poids, puis 650 cm³ d'une solution à 46,4 g/l d'acide borique dans le méthanol. On obtient ainsi le catalyseur G dont les caractéristiques sont résumées dans le tableau 1 ci-après. Le pourcentage en poids de la somme du poids de trioxyde de bore et de pentoxyde de phosphore par rapport au support est de 4,0%.

EXEMPLE 8 (comparatif)

On procède de la même façon que dans l'exemple 4, mais on utilise une solution d'imprégnation contenant la même quantité des mêmes composés du molybdène et du nickel, et 170 g de phosphate d'ammonium trihydraté. On omet l'étape de maturation. La matrice imprégnée est immédiatement séchée et calcinée comme décrit à l'exemple 3. Le produit obtenu est alors imprégné par 660 cm³ d'une solution aqueuse de phosphate d'ammonium trihydraté à 70,1 g/l. Le produit obtenu est séché et calciné comme à l'étape précédente. Le produit de cette deuxième calcination est imprégné par 660 cm³ d'une solution à 136 g/l d'acide borique dans le méthanol. Le produit imprégné est mûri, séché et calciné comme décrit ci-avant dans l'exemple 4. On obtient ainsi le catalyseur H, dont les caractéristiques sont résumées dans le tableau 1 ci-après.

Le pourcentage en poids de la somme du poids de trioxyde de bore et de pentoxyde de phosphore par rapport au support est de 11,02% comme pour le catalyseur D, mais le pourcentage du volume poreux dans des pores de diamètre supérieur à 13 nanomètres est seulement de 32%.

EXEMPLE 9

On procède de la même façon que dans l'exemple 4, mais on utilise une solution aqueuse contenant 263,8 g d'heptamolybdate d'ammonium tétrahydraté, 171 g de nitrate de nickel hexahydraté, et 149,3 g d'acide phosphorique à 85% en poids, puis 620 cm³ d'une solution à 95 g/l d'acide borique dans le methanol. L'imprégnation par la solution méthanolique d'acide borique est réalisée deux fois de la même manière qu'à l'exemple 3.

On obtient ainsi le catalyseur I, dont les caractéristiques sont résumées dans le tableau 1 ci-après. Le pourcentage en poids de la somme du poids des trioxydes de bore et de pentoxyde de phosphore par rapport au support est de 13,46%.

## TABLEAU 1

| Catalyseur | A | B | C | D | E | F | G | H | I |
|---|---|---|---|---|---|---|---|---|---|
| Forme | extrudés cylindriques de 1,2 mm de diamètre | | | | | | | | |
| $MoO_3$ % poids | 15,2 | 15,2 | 15,2 | 15,2 | 15,2 | 15,2 | 15,2 | 15,2 | 15,2 |
| NiO % poids | 3,1 | 3,1 | 3,1 | 3,1 | 3,1 | 3,1 | 3,1 | 3,1 | 3,1 |
| $P_2O_5$ % poids | 0 | 9 | 0 | 5,5 | 6,05 | 8 | 2 | 5,5 | 6,5 |
| $B_2O_3$ % poids | 0 | 0 | 9 | 3,5 | 2,95 | 5,1 | 1,3 | 3,5 | 4,5 |
| $Al_2O_3$ % poids | 81,7 | 72,7 | 72,7 | 72,7 | 72,7 | 68,6 | 78,4 | 72,7 | 70,7 |
| Surface $m^2xg^{-1}$ | 210 | 150 | 190 | 140 | 145 | 120 | 200 | 200 | 135 |
| volume poreux total $cm^3xg^{-1}$ | 0,55 | 0,43 | 0,48 | 0,43 | 0,44 | 0,37 | 0,50 | 0,51 | 0,42 |
| % volume poreux en pores de diamètre supérieur à 13 nm | 25 | 55 | 50 | 60 | 60 | 75 | 35 | 32 | 60 |
| B/P.atomique | indéfini | 0 | infini | 1,3 | 1 | 1,3 | 1,3 | 1,3 | 1,41 |
| P/Mo atomique | 0 | 1,20 | 0 | 0,73 | 0,81 | 1,07 | 0,267 | 0,73 | 0,87 |
| Ni/Mo atomique | 0,39 | 0,39 | 0,39 | 0,39 | 0,39 | 0,39 | 0,39 | 0,39 | 0,39 |

EXEMPLE 10 (test d'hydrogénation sur molécule modèle).

Les catalyseurs A à I sont sulfurés en régime dynamique dans un réacteur tubulaire d'une unité pilote de laboratoire de type CATATEST (constructeur GEOMECANIQUE).

Des tests catalytiques d'hydrogénation du toluène en présence de soufre sont effectués immédiatement après les sulfurations, dans le même réacteur, sans que les catalyseurs soient remis au contact de l'oxygène de l'air : on mesure ainsi les activités catalytiques stabilisées de volumes égaux des catalyseurs A à I dans la réaction d'hydrogénation du toluène.

50 cm³ de chaque catalyseur sont introduit dans la zone centrale du réacteur tubulaire. Après essais d'étanchéité, le réacteur est purgé par un balayage d'azote sec, puis d'hydrogène, à froid. La température du réacteur est alors portée à 150°C, et la pression d'hydrogène à 60 bars (6 MPa) sous un débit de 45 normaux litres par heure. On injecte alors à l'entrée du réacteur une charge liquide constituée de 78% en poids de cyclohexane (diluant inerte), 20% en poids de toluène (réactif) et 2% poids de diméthyl-di-sulfure (DMDS : agent de sulfuration).

Les fluides s'écoulent verticalement de haut en bas. Le débit d'injection de la charge liquide est fixé à 100 cm³/h, ce qui correspond à une vitesse spatiale horaire égale à 2 h⁻¹. Après stabilisation des débits liquides et gazeux, la température du réacteur est portée à 280°C. Un palier de 2 heures est observé à cette température. On monte ensuite à 300°C, puis 320°C et enfin 350°C en observant pour chaque température un palier de deux heures. A l'issue du palier final, la sulfuration du catalyseur est terminée.

Les caractéristiques texturales et les rapports atomiques Ni/Mo, P/Mo et B/P des catalyseurs sont inchangés par la sulfuration. Le test d'hydrogénation du toluène est immédiatement enchaîné à la suite de cette sulfuration, simplement en remplaçant le DMDS de la charge liquide par le même pourcentage pondéral de thiophène. La température est maintenue à 350°C, la pression totale à 60 bars (6 MPa), le débit d'hydrogène à 45 l/h (TPN température et pression normale) et le débit d'injection liquide à 100 cm³/h pendant 8 heures. Des prélèvements de l'effluent liquide sont effectués toutes les heures et ces prélèvements sont analysés par chromatographie en phase gazeuse. La détermination des titres massiques des effluents en toluène, (T) (non converti), et en ses produits d'hydrogénation, le méthylcyclohexane (MCC6), l'éthyl-cyclopentane (ECC5) et les diméthyl-cyclo-pentanes (DMCC5) permet de calculer un taux d'hydrogénation du toluène X, défini par la formule suivante :

$$X\% = 100 \times \frac{(MCC6 + ECC5 + DMC5)}{(T + MCC6 + ECC5 + DMC5)}$$

La réaction d'hydrogénation du toluène étant d'ordre 1 par rapport au réactif toluène dans nos conditions expérimentales, et le réacteur se comportant comme un réacteur idéal, intégral piston, on calcule l'activité K du catalyseur en appliquant la formule :

$$K = Ln\left[\frac{(100)}{(100-M)}\right]$$

où Ln est le logarithme népérien et M la moyenne des taux d'hydrogénation mesurés sur les quatre derniers prélèvements du test. Le tableau 2 permet de comparer les performances des catalyseurs A à I en termes d'activité en hydrogénation d'une molécule aromatique à iso-volume catalytique . Kr est l'activité relative, égale au rapport de l'activité du catalyseur considéré sur l'activité du catalyseur A pris comme référence.

## TABLEAU 2

| Catalyseurs | A | B | C | D | E | F | G | H | I |
|---|---|---|---|---|---|---|---|---|---|
| M (%) | 56 | 73 | 63,5 | 79 | 74 | 65 | 72 | 68 | 78,1 |
| K | 0,8 | 1,3 | 1,01 | 1,57 | 1,35 | 1,05 | 1,27 | 1,14 | 1.52 |
| Kr | 1,0 | 1,61 | 1,26 | 1,96 | 1,68 | 1,31 | 1,6 | 1,42 | 1,90 |

Le tableau 2 met bien en évidence les progrès apportés par les catalyseurs D et I selon l'invention. Le catalyseur D est une réalisation selon le mode préféré de l'invention, et il est pratiquement deux fois plus actif que le catalyseur A. Ce dernier est représentatif de l'état de la technique car il correspond à une formule commerciale actuelle. Le phosphore et le bore ont des effets promoteurs du couple métallique nickel-molybdène dans la réaction considérée, mais comme en témoignent la comparaison entre les résultats obtenus avec les catalyseurs D et I d'une part et B et C d'autre part, c'est leur association dans les conditions de l'invention qui procure un effet de synergie inattendu.

EXEMPLE 11

250 cm³ de chacun des catalyseurs A à I sont sulfurés dans les conditions décrites à l'exemple 10, dans un réacteur pilote isotherme, le débit d'hydrogène étant porté à 225 normaux litres par heure, (TPN), et le débit de charge liquide à 500 cm³ par heure. Les catalyseurs sulfurés obtenus de la sorte sont ensuite comparés dans le même réacteur dans un test d'hydrotraitement de distillat sous vide conçu pour simuler la première étape d'un hydrocraquage basse pression. Le test d'hydrotraitement s'enchaîne immédiatement après la sulfuration.

La charge est un distillat sous vide de brut Koweit dont les caractéristiques sont présentées au tableau 3 ci-après.

La pression totale est fixée à 70 bars, 7(MPa) la V.V.H à 1 litre de charge par heure et par litre de catalyseur, le rapport hydrogène sur hydrocarbures à 700 normaux litres par litre et la température de travail à 370°C. Le test est opéré en continu pendant 300 heures.

Les effluents sont prélevés biquotidiennement et soumis aux analyses élémentaires et physico-chimiques appropriées. Les catalyseurs sont comparés sur la base de leurs performances moyennes stabilisées pendant les 100 dernières heures de test. Cette comparaison est présentée au tableau 4 ci-après en terme de caractéristiques moyennes des effluents des cent dernières heures de test.

## TABLEAU 3

```
| Caractéristiques du DSV Koweit                                 |
|                                                                |
| Densité à 15°C                              0,918   gxcm^-3    |
| Indice de réfraction à 70°C (n_d^70 )       1,497             |
| Soufre total                                2,87 % poids       |
| azote total (N)                             1090 ppm poids     |
| Polyaromatiques (PA)                        13,4 % poids       |
| Masse moléculaire moyenne                   400   g/mole       |
| Distillation norme ASTM D 1160                                 |
|    Point Initial                            332°C              |
|    Point 5%                                 365                |
|    Point 50%                                451                |
|    Point 95%                                514                |
|    Point final                             550                |
| teneur en résidu 375°C^+                     92,9 % poids      |
```

Caractéristiques du DSV Koweit

Densité à 15°C $\qquad$ 0,918 gxcm$^{-3}$

Indice de réfraction à 70°C ($n_d^{70}$) 1,497

Soufre total 2,87 % poids

azote total (N) 1090 ppm poids

Polyaromatiques (PA) 13,4 % poids

Masse moléculaire moyenne 400 g/mole

Distillation norme ASTM D 1160

Point Initial 332°C

Point 5% 365

Point 50% 451

Point 95% 514

Point final 550

teneur en résidu 375°C$^+$ 92,9 % poids

## TABLEAU 4

| Catalyseur | A | B | C | D | E | F | G | H | I |
|---|---|---|---|---|---|---|---|---|---|
| $d'^{15}_4$ (gxcm$^{-3}$) | 0,880 | 0,876 | 0,879 | 0,874 | 0,876 | 0,879 | 0,877 | 0,880 | 0,874 |
| $n_d^{70}$ | 1,478 | 1,472 | 1,477 | 1,471 | 1,478 | 1,478 | 1,473 | 1,480 | 1,471 |
| S (% poids) | 0,075 | 0,087 | 0,080 | 0,085 | 0,086 | 0,083 | 0,088 | 0,095 | 0,084 |
| N (ppm poids) | 450 | 330 | 390 | 269 | 310 | 380 | 350 | 420 | 275 |
| PA (% poids) | 4,5 | 3,8 | 3,9 | 3,0 | 3,7 | 3,8 | 3,9 | 4,2 | 3,1 |
| 375°C(%poids) | 85 | 81 | 81 | 77 | 80 | 80 | 82 | 95 | 78 |

Le tableau 4 met bien en évidence à nouveau l'intérêt des catalyseurs D et I selon l'invention, en hydroraffinage : l'incorporation à la fois de phosphore et de bore selon l'invention dans la formule catalytique a un effet promoteur très sensible sur les activités en hydrodésazotation, hydrogénation des aromatiques et même en conversion de la fraction lourde, pour le couple des métaux actifs nickel et molybdène. Le bore et le phosphore agissent ici en synergie pour ces réactions : chacun des deux éléments a un effet positif sur l'activité lorsqu'il est associé seul au couple NiMo, mais, l'effet de l'addition du couple bore+phosphore dans les proportions selon l'invention est plus grand que la somme des effets des additions des deux éléments séparés, et cet effet est supérieur à celui que l'on obtient lorsque le couple phosphore+bore n'est pas dans les proportions selon l'invention. Ce point est mieux souligné au tableau 5 où l'on a indiqué les activités relatives désazotantes et hydrogénantes des catalyseurs dans ce test d'hydroraffinage. Ces activités sont calculées à partir des résultats chiffrés des tableaux 3 et 4 en appliquant les règles classiques dans ce cas : la réaction d'hydrodésazotation suivant un ordre apparent 1,5 par rapport à l'azote total (N), et la réaction d'hydrogénation des polyaromatiques suivant un ordre apparent 1 par rapport aux polyaromatiques (PA), le lit catalytique se comportant dans ce test comme un réacteur isotherme idéal piston, les activités $K^{HDN}$ et $K^{PA}$ se calculent en appliquant les formules :

$$K^{HDN} = \left(\frac{N^o}{N}\right)^{0,5} - 1$$

$$K^{PA} = Ln\left(\frac{PA^o}{PA}\right)$$

où Ln est le logarithme népérien et l'exposant zéro indique la concentration initiale. Les activités relatives sont les activités rapportées à l'activité du catalyseur A multipliées par 100.

**TABLEAU 5**

| Catalyseur | A | B | C | D | E | F | G | H | I |
|---|---|---|---|---|---|---|---|---|---|
| $K^{HDN}$ REL | 100 | 148 | 122 | 182 | 157 | 125 | 137,5 | 110 | 178 |
| $K^{PA}$ REL | 100 | 115 | 113 | 137 | 118 | 115,5 | 113 | 106 | 134 |

Il est important de remarquer que le catalyseur H, qui a la même composition chimique que le catalyseur D selon l'invention ne présente pas l'effet de synergie attendu dans ce test d'hydroraffinage. Le catalyseur H n'a que 32% de son volume poreux total en pores de diamètre supérieur à 13 nm et de ce fait se situe en dehors du domaine de caractéristiques des catalyseurs selon l'invention.

**Revendications**

1. Catalyseur renfermant :
a/ un support comprenant une matrice minérale poreuse, du bore ou un composé de bore et du phosphore ou un composé de phosphore, et
b/ au moins un métal ou composé de métal du groupe VIB de la classification périodique des éléments et au moins un métal ou composé de métal du groupe VIII de ladite classification,
caractérisé en ce que la somme des quantités de bore et de phosphore, exprimées respectivement en poids de trioxyde de bore et de pentoxyde de phosphore, par rapport au poids de support, est d'environ 5 à 15% et le rapport atomique bore sur phosphore est de 1,05:1 à 2:1 et en ce que au moins 40% du volume poreux total, du catalyseur fini, est contenu dans des pores de diamètre moyen supérieur à 13 nanomètres.
2. Catalyseur selon la revendication 1 dans lequel la quantité de métal du groupe VIB est telle que le rapport atomique phosphore sur métal du groupe VIB est de 0,5:1 à 1,5:1.
3. Catalyseur selon la revendication 1 ou 2 dans lequel les quantités respectives de métal du groupe VIB et de métal du groupe VIII sont telles que le rapport atomique métal du groupe VIII sur métal du groupe VI B est de 0,3:1 à 0,7:1.

4. Catalyseur selon l'une des revendications 1 à 3 dans lequel la quantité de métal du groupe VIB exprimée en poids de métal par rapport au poids du catalyseur fini est de 2 à 30% et la quantité de métal du groupe VIII exprimée en poids de métal par rapport au poids du catalyseur fini est de 0,1 à 15%.

5. Catalyseur selon l'une des revendications 1 à 4 dans lequel la matrice est choisie dans le groupe formé par l'alumine, la silice-alumine, les mélanges d'alumine et de zéolithe et les mélanges de silice-alumine et de zéolithe.

6. Catalyseur selon l'une des revendications 1 à 5 dans lequel le métal du groupe VIB est choisi dans le groupe formé par le molybdène et le tungstène et le métal du groupe VIII est choisi dans le groupe formé par le nickel, le cobalt et le fer.

7. Catalyseur selon l'une des revendications 1 à 6 dans lequel le métal du groupe VIB est le molybdène et le métal du groupe VIII est choisi dans le groupe formé par le nickel et le cobalt.

8. Procédé de préparation d'un catalyseur selon l'une des revendications 1 à 7 caractérisé en ce qu'il comprend les étapes suivantes :

a/ on imprègne la matrice minérale poreuse à l'aide d'une solution aqueuse contenant au moins un composé soluble du phosphore, au moins un composé soluble d'un métal du groupe VIB et au moins un composé soluble d'un métal du groupe VIII,

b/ on mûrit en atmosphère saturée de vapeur d'eau, le produit résultant de l'étape (a),

c/ on sèche et on calcine sous air le produit résultant de l'étape (b),

d) on imprègne à l'aide d'une solution d'un composé de bore le produit résultant de l'étape (c),

e/ on mûrit, en atmosphère saturée de solvant, le produit résultant de l'étape (d),

f/ on élimine le solvant et on calcine sous air le produit résultant de l'étape (e)

9. Procédé de préparation d'un catalyseur selon la revendication 8 dans lequel à l'étape (d) le composé de bore est en solution dans un solvant choisi dans le groupe formé par les alcools, les mélanges eau-alcools et les hydrocarbures,

10. Procédé de préparation d'un catalyseur selon la revendication 8 ou 9 dans lequel à l'étape (d) le composé de bore est choisi dans le groupe formé par l'acide borique et les esters boriques de formules $B(OR)_3$ et $HB(OR)_2$ dans lesquelles R est un reste hydrocarboné ayant de 1 à 50 atomes de carbone.

11. Utilisation d'un catalyseur selon l'une des revendications 1 à 7 ou d'un catalyseur préparé selon l'une des revendications 8 à 10 dans les réactions d'hydroraffinage de coupes d'hydrocarbures renfermant des composés aromatiques, de l'azote et du soufre.

## Patentansprüche

1. Katalysator umfassend:

a) einen Träger mit einer porösen mineralischen Matrix, Bor oder eine Borverbindung und Phosphor oder eine Phosphorverbindung und

b) wenigstens ein Metall oder eine Metallverbindung der Gruppe VIB (französische Klassifizierung) des Periodensystems der Elemente und wenigstens ein Metall oder eine Metallverbindung der Gruppe VIII dieser Klassifizierung,

dadurch gekennzeichnet, daß die Summe der Mengen an Bor und Phosphor, ausgedrückt jeweils als Gewicht von Bortrioxid und Phosphorpentoxid, bezogen auf das Gewicht des Trägers, etwa 5 bis 15% und das Atomverhältnis Bor zu Phosphor 1:1 bis 2:1 beträgt und daß wenigstens 40 Volumen-% des gesamten Porenvolumens des fertigen Katalysators in Poren von einem mittleren Durchmesser von mehr als 13 Nanometer enthalten ist.

2. Katalysator nach Anspruch 1, bei dem die Menge an Metall der Gruppe VIB derart ist, daß das Atomverhältnis von Phosphor zu Metall der Gruppe VIB 0,5:1 bis 1,5:1 beträgt.

3. Katalysator nach Anspruch 1 oder 2, bei dem die jeweiligen Mengen von Metall der Gruppe VIB und des Metalls der Gruppe VIII derart sind, daß das Atomverhältnis Metall der Gruppe VIII zu Metall der Gruppe VIB 0,3:1 bis 0,7:1 beträgt.

4. Katalysator nach einem der Ansprüche 1 bis 3, bei dem die Menge an Metall der Gruppe VIB, ausgedrückt als Gewicht Metall bezogen auf das Gewicht des fertigen Katalysators 2 bis 30% und die Menge an Metall der Gruppe VIII, ausgedrückt als Gewicht Metall bezogen auf das Gewicht des fertigen Katalysators, 0,1 bis 15% beträgt.

5. Katalysator nach einem der Ansprüche 1 bis 4, bei dem die Matrix gewählt ist aus der Gruppe, welche gebildet wird durch Aluminiumoxid, Siliciumoxid-Aluminiumoxid, den Gemischen aus Aluminiumoxid und Zeolith und den Gemischen Siliciumoxid-Aluminiumoxid und Zeolith.

6. Katalysator nach einem der Ansprüche 1 bis 5, bei dem das Metall der Gruppe VIB gewählt ist aus der Gruppe, die gebildet ist durch Molybdän und Wolfram und das Metall der Gruppe VIII gewählt ist aus der Gruppe, die gebildet ist durch Nickel, Kobalt und Eisen.

7. Katalysator nach einem der Ansprüche 1 bis 6, bei dem das Metall der Gruppe VIB Molybdän ist und das Metall der Gruppe VIII gewählt ist aus der durch Nickel und Kobalt gebildeten Gruppe.

8. Verfahren zum Herstellen eines Katalysators nach einem der Ansprüche 1 bis 7, dadurch gekennzeichnet, daß es die folgenden Stufen umfaßt:

a) man imprägniert die poröse mineralische Matrix mit Hilfe einer wässrigen Lösung, die wenigstens eine lösliche Verbindung des Phosphors, wenigstens eine lösliche Verbindung eines Metalls der Gruppe VIB und wenigstens eine lösliche Verbindung eines Metalls der Gruppe VIII enthält,

b) man läßt in gesättigter Wasserdampfatmosphäre das aus der Stufe (a) kommende Produkt reifen,

c) man trocknet und kalziniert unter Luft das aus der Stufe (b) resultierende Produkt,

d) man imprägniert mit Hilfe einer Lösung einer Borverbindung das aus der Stufe (c) stammende Produkt,

e) man läßt in gesättigter Lösungsmittelatmosphäre das aus der Stufe (d) kommende Produkt reifen, und

f) man eliminiert das Lösungsmittel und kalziniert unter Luft das aus der Stufe (e) kommende Produkt.

9. Verfahren zum Herstellen eines Katalysators nach Anspruch 8, bei dem in der Stufe (d) die Borverbindung in Lösung in einem Lösungsmittel sich befindet, das gewählt ist aus der durch die Alkohole, die Wasser-Alkohol-Gemische und die Kohlenwasserstoffe gebildeten Gruppe.

10. Verfahren zum Herstellen eines Katalysators nach einem der Ansprüche 8 oder 9, bei dem in der Stufe (d) die Borverbindung gewählt ist aus der Gruppe, welche gebildet wird durch Borsäure und die Borsäureester der Formeln $B(OR)_3$ und $HB(OR)_2$, in denen R ein Kohlenwasserstoffrest mit 1 bis 50 Kohlenstoffatomen ist.

11. Verwendung eines Katalysators nach einem der Ansprüche 1 bis 7 oder eines nach einem der Ansprüche 8 bis 10 hergestellten Katalysators in den Reaktionen der Hydroraffinierung von Kohlenwasserstoff-Fraktionen, welche aromatische Verbindungen, Stickstoff und Schwefel enthalten.

## Claims

1. Catalyst comprising:

a) a support containing a porous inorganic matrix, boron cr a boron compound and phosphorus or a phosphorus compound, and

b) at least one metal or compound of metal from Group VIB of the periodic table of elements and at least one metal or compound of metal from Group VIII of said table, characterized in that the sum of the boron and the phosphorus amounts, respectively expressed in weight of boron trioxide and phosphorus pentoxide, in relation to the weight of the support, is from about 5 to 15% and the boron to phosphorus atomic ratio is from 1.05:1 to 2:1, and in that at least 40% of the total pore volume of the finished catalyst is contained in pores with an average diameter greater than 13 nanometers.

2. A catalyst according to claim 1, wherein the amount of metal from Group VIB is such that the phosphorus to metal from Group VIB atomic ratio is from 0.5:1 to 1.5:1.

3. A catalyst according to claim 1 or 2 wherein the respective amounts of metal from Group VIB and of metal from Group VIII are such that the metal from Group VIII-metal from Group VIB atomic ratio is 0.3:1 to 0.7:1.

4. A catalyst according to one of claims 1 to 3 wherein the amount of metal from Group VIB, expressed in weight of metal in relation to the weight of the finished catalyst, is from 2 to 30% and the amount of metal from Group VIII, expressed in weight of metal in relation to the weight of the finished catalyst, is from 0.1 to 15%.

5. A catalyst according to one of claims 1 to 4 wherein the matrix is selected from the group comprising alumina, silica-alumina, alumina and zeolite mixtures and silica-alumina and zeolite mixtures.

6. A catalyst according to one of claims 1 to 5 wherein the metal from Group VIB is selected from the group comprising molybdenum and tungsten, and the metal from Group VIII is selected from the group comprising nickel, cobalt and iron.

7. A catalyst according to one of claims 1 to 6 wherein the metal from Group VIB is molybdenum and the metal from Group VIII is chosen within the group comprising nickel and cobalt.

8. A process for preparing a catalyst according to one of claims 1 to 7 characterized in that it comprises the following steps of:

a) impregnating the porous inorganic matrix with an aqueous solution containing at least one soluble phosphorus compound, at least one soluble compound of a metal from Group VIB and at least one soluble compound of a metal from Group VIII,

b) ripening the product resulting from stage (a) in an atmosphere saturated with water vapor,

c) drying and calcinating under air the product resulting from stage (b),

d) impregnating the product resulting from stage (c) with a solution of a baron compound, e) ripening the product resulting from stage (d) in an atmosphere saturated with solvent,

f) eliminating the solvent and calcinating under air the product resulting from stage (e).

9. A process for preparing a catalyst according to claim 8, wherein the boron compound, in stage (d), is dissolved in a solvent selected from the group comprising alcohols, wateralcohols mixtures and hydrocarbons.

10. A process for preparing a catalyst according to claim 8 or 9 wherein the boron compound, in stage (d), is selected from the group comprising boric acid and boric esters with the formulae $B(OR)_3$ and $HB(OR)_2$, where R is a hydrocarbon rest with 1 to 50 carbon atoms.

11. Use of a catalyst according to to one of claims 1 or to 7 a catalyst prepared according to one of claims 8 to 10 in the hydrorefining reactions of hydrocarbon cuts comprising aromatic compounds, nitrogen and sulfur.